(19) Europäisches Patentamt
European Patent Office
Office européen des brevets

(11) Numéro de publication : **0 432 255 B1**

# (12) FASCICULE DE BREVET EUROPEEN

(45) Date de publication du fascicule du brevet : **14.09.94 Bulletin 94/37**

(51) Int. Cl.$^5$ : **G02F 1/29**

(21) Numéro de dépôt : **90910763.3**

(22) Date de dépôt : **03.07.90**

(86) Numéro de dépôt international : **PCT/FR90/00500**

(87) Numéro de publication internationale : **WO 91/00542 10.01.91 Gazette 91/02**

## (54) TRANSLATEUR OPTIQUE BIREFRINGENT ET ECRAN TRI-DIMENSIONNEL BIREFRINGENT.

(30) Priorité : **03.07.89 FR 8908895**

(43) Date de publication de la demande : **19.06.91 Bulletin 91/25**

(45) Mention de la délivrance du brevet : **14.09.94 Bulletin 94/37**

(84) Etats contractants désignés : **DE GB**

(56) Documents cités :
**US-A- 3 536 921**
**An Introduction to Electrooptic Devices, I.P. Kaminov, Academic Press, 1974**
**W.G. Driscoll, Ed. : "Handbook of Optics", 1978, Mc Grawhill Book CY, (New York, US), pages 10-107, 10-117.**
**PATENT ABSTRACTS OF JAPAN, vol. 7, no. 245 (P-233), 29 octobre 1983 ; & JP-A-58130322**

(73) Titulaire : **FRANCE TELECOM**
**6, Place d'Alleray**
**F-75015 Paris (FR)**

(72) Inventeur : **SIRAT, Gabriel**
**5, rue Leredde**
**F-75013 Paris (FR)**
Inventeur : **CHARLOT, Didier**
**2, rue Rémy-Dumoncel**
**F-75014 Paris (FR)**

(74) Mandataire : **Martin, Jean-Jacques et al**
**Cabinet REGIMBEAU**
**26, Avenue Kléber**
**F-75116 Paris (FR)**

EP 0 432 255 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un translateur optique biréfringent et un écran tri-dimensionnel faisant application de ce translateur.

On entend par "translateur optique biréfringent" un système optique apte à déplacer longitudinalement, de façon contrôlée, l'image d'un point.

Le document US-A-3536921 (Caulfield) décrit un système translateur comprenant une pluralité de moyens de polarisation électro-optiques et de cristaux biréfringents.

Selon le document US-A-3536921 (voir notamment col. 1, lignes 40-42 ; col. 2, lignes 13-15 ; col. 4, lignes 47-48 ; col. 7, revendication 2 : col. 7, lignes 2-66) les cristaux biréfringents ont leurs axes optiques parallèles à l'axe optique du système.

En raison de cette disposition, le système proposé dans le document US-A-3536921 n'est exploitable qu'à la condition d'utiliser un faisceau lumineux incident unidirectionnel, c'est-à-dire en forme de nappe plane ou feuille.

Ceci a été vérifié expérimentalement par les inventeurs.

La disposition proposée dans le document US-A-3536921 ne donne donc qu'une parallaxe horizontale.

On sait aujourd'hui que sans parallaxe verticale les informations perçues ne sont pas naturelles et entrainent rapidement une gêne et une fatigue importantes pour l'observateur. La présente invention a pour but d'éliminer ces inconvénients.

Le translateur optique biréfringent conforme à la présente invention définit un axe optique et comprend au moins un cristal biréfringent, et des moyens de polarisation placés en amont du cristal biréfringent, entre celui-ci et un objet, et adaptés pour définir de façon contrôlée, respectivement dans un premier état commandé, une polarisation linéaire perpendiculaire à l'axe optique du cristal, et dans un second état commandé, une polarisation linéaire parallèle à l'axe optique de celui-ci, et ce translateur est caractérisé selon l'invention par le fait que l'axe optique du cristal biréfringent est sensiblement perpendiculaire à l'axe optique du translateur.

Ainsi, le système proposé par la présente invention permet d'utiliser un faisceau lumineux incident à cône et permet d'obtenir à la fois une parallaxe horizontale et une parallaxe verticale.

Plus précisément, selon l'invention, le translateur optique biréfringent comprend de préférence une pluralité d'étages juxtaposés selon l'axe optique du translateur et comportant chacun

- un cristal biréfringent dont l'axe optique est sensiblement perpendiculaire à l'axe optique du translateur, et
- des moyens de polarisation placés en amont du cristal biréfringent respectivement associé et adaptés pour définir de façon contrôlée, respectivement dans un premier état commandé, une polarisation linéaire perpendiculaire à l'axe optique du cristal associé, et dans un second état commandé, une polarisation linéaire parallèle à l'axe optique de ce cristal associé.

L'écran tri-dimensionnel conforme à la présente invention comprend un translateur optique biréfringent du type indiqué ci-dessus, et un système à balayage placé en amont du translateur et conçu pour déplacer un point objet, de façon contrôlée, dans un plan perpendiculaire à l'axe optique du translateur.

D'autres caractéristiques, buts et avantages de la présente invention apparaitront à la lecture de la description qui va suivre, et en regard des dessins annexés donnés à titre d'exemples non limitatifs et sur lesquels :

- la figure 1 représente une vue schématique d'une cellule de base comportant un translateur optique biréfringent conforme à la présente invention,
- la figure 2 représente une vue schématique d'un translateur conforme à la présente invention, et
- la figure 3 illustre schématiquement un écran tri-dimensionnel conforme à la présente invention.

On aperçoit sur la figure 1 un translateur comprenant un cristal biréfringent 10 et des moyens de polarisation 20.

L'axe optique du translateur est référencé O-O. Cet axe optique O-O coïncide avec l'axe d'observation d'un oeil 30 schématiquement représenté sur la droite de la figure 1.

Le cristal biréfringent 10 a une longueur L selon l'axe O-O ; il possède un indice ordinaire no, et présente une biréfringence $\Delta$n.

L'axe optique du cristal 10 est perpendiculaire à l'axe optique O-O du système. L'axe optique du cristal 10 est schématiquement représenté sous la référence B-B sur la figure 1.

Les moyens de polarisation 20 sont placés en amont du cristal biréfringent 10, c'est-à-dire à l'opposé du point d'observation 30, par rapport au cristal 10.

Plus précisément, les moyens de polarisation 20 sont placés entre un point A à translater et le cristal biréfringent 10.

Les moyens de polarisation 20 sont conçus pour définir de façon contrôlée, soit, dans un premier état commandé, une polarisation linéaire perpendiculaire à l'axe optique B-B du cristal et perpendiculaire à l'axe

optique O-O du système, soit, dans un deuxième état commandé, une polarisation linéaire parallèle à l'axe optique B-B du cristal.

Lorsque la polarisation est perpendiculaire à l'axe optique B-B du cristal, le point A est vu par un observateur 30 à la position Ao telle que

$$(1) \qquad no(Ao - A) = (no - 1)\, L.$$

Lorsque la polarisation est parallèle à l'axe optique B-B du cristal, le point A est vu à la position Ae telle que

$$(2) \qquad (Ao - Ae) = \Delta n\, L_{/n}^{2}$$

La rotation de 90° de la polarisation permet par conséquent de translater l'image d'une distance $\Delta n\, L_{/n}^{2}$ entre les positions Ao et Ae.

Cet effet est achromatique au premier ordre.

La position de point image présente une dépendance angulaire non constante, car l'indice de réfraction extraordinaire est fonction de l'angle. Cependant, la variation est faible :

$$(3) \qquad \Delta n\,(\theta)\ \underline{N}\Delta n \cos^2\theta.$$

l'aberration résultante, de type sphérique longitudinale, qui est fonction de la position longitudinale du point, est donc faible.

Comme illustré schématiquement sur la figure 1 annexée, de préférence les moyens de polarisation 20 sont formés de deux éléments séparés, à savoir : 1) un polariseur linéaire 21, et 2) un organe 22 dénommé valve ou rotateur apte à tourner sélectivement la polarisation de 90° (assimilable fonctionnellement à une lame λ/2) - lorsque l'axe transmissif est parallèle à la direction de polarisation issue du polariseur linéaire 21, la direction de polarisation n'est pas modifiée - par contre, lorsque l'axe transmissif de l'organe 22 est à 45° de la direction de polarisation issue du polariseur linéaire 21, on obtient une rotation de la polarisation de 90°).

La rotation de la polarisation peut être obtenue à l'aide de toute une gamme d'effets : mécaniques, électro-optique, effets dans les cristaux liquides, effets acousto-optique, activité optique, effet Faraday ou Kerr, etc...

Le système décrit précédemment en regard de la figure 1 correspond à un translateur à 1 étage.

Le système représenté sur la figure 2 considéré actuellement comme largement préférentiel, correspond à un translateur à n étages. Plus précisément, selon la figure 2, le translateur comprend 5 étages. Ce nombre n'est pas limitatif bien que de façon avantageuse, le nombre d'étages soit de l'ordre de 5 à 9.

On retrouve sur la figure 2, l'axe optique O-O du translateur.

Chaque étage, 1 à n, comprend un cristal biréfringent 10.1 à 10.n et des moyens de polarisation associés 20.1 à 20.n.

L'axe optique de chaque cristal 10.1 à 10.n est perpendiculaire à l'axe optique O-O du système. De préférence, les axes B-B des différents cristaux 10.1 à 10.n sont parallèles entre eux.

Les moyens de polarisation 20.1 à 20.n sont placés en amont des cristaux 10.1 à 10.n respectivement associés.

Chacun des moyens de polarisation 20.1 à 20.n est conçu pour définir, de façon contrôlée, soit une polarisation linéaire perpendiculaire à l'axe optique du cristal 10.1 à 10.n respectivement associé dans un premier état commandé, soit une polarisation linéaire parallèle à l'axe optique du cristal 10.1 à 10.n, dans un deuxième état commandé.

Lorsque toutes les polarisations définies par les moyens 20.1 à 20.n sont perpendiculaires à l'axe optique B-B des cristaux 10.1 à 10.n respectivement associés, le point A est vu par un observateur 30 à la position A'o telle que

$$(4) \quad (A'o - A) = \sum_{i=1}^{n} (1 - 1/noi) \quad Li$$

Lorsque toutes les polarisations définies par les moyens 20.1 à 20.n sont parallèles à l'axe optique B-B des cristaux 10.1 à 10.n respectivement associés, le point A est vu en revanche, par un observateur 30, à la position A'e telle que

$$(5) \quad (A'o - A'e) = \sum_{i-1}^{n} \Delta ni \; Li/ni^{2}$$

Lorsque certaines des polarisations définies par les moyens 20.1 à 20.n sont perpendiculaires aux axes

optiques des cristaux associés 10.1 à 10.n, tandis que les autres polarisations sont parallèles aux axes optiques des autres cristaux respectivement associés 10-1 à 10.n, le point A est vu à une position A′ comprise entre A′o et A′e.

L'excursion maximale possible $\Delta zo$ entre les points A′o et A′e est donc égale à :

$$\sum_{i=1}^{n} \Delta ni\ Li/ni^2.$$

La plus petite distance de translation susceptible d'être obtenue entre deux points images A′ est égale au plus petit $\Delta ni\ Li/ni^2$.

De préférence, les différents étages du translateur sont conçus pour opérer n translations respectives $\Delta ni\ Li/ni^2$ évoluant selon une progression géométrique de 2, et définie par conséquent par $(2^{i-1})\ \Delta n1\ L1/n1^2$ où

$\Delta ni$ représente la biréfringence du cristal i,

Li représente la longueur, selon l'axe optique O-O du système, du cristal i, et

ni étant l'indice de réfraction du cristal

$\Delta n1\ L1/n1^2$ représente la plus petite translation opérée par l'un des cristaux.

De préférence, les cristaux 10.1 à 10.n sont de même nature et présentent par conséquent des biréfringences $\Delta ni$ identiques. Dans ce cas, les différences de translation du point A introduites par les cristaux 10.1 à 10.n dépendent directement de la longueur Li de chaque cristal. De préférence, les cristaux 10.1 à 10.n possèdent des longueurs Li qui évoluent selon la loi $(2^{i-1})L1$ (progression géométrique de 2), L1 étant la longueur du cristal 10.1 le plus court. Dans ce cas, l'excursion $\Delta zo$ est égale à $(2^{n-1})\ \Delta z$ ou $\Delta z = n1L1:n1$ représente la plus petite distance de translation possible.

Le cristal 10.1 le plus court peut être placé, soit le plus éloigné du point A (comme représenté sur la figure 2), soit le plus proche de ce point. C'est-à-dire que la longueur Li des cristaux peut croître ou décroître en rapprochement du point A.

De préférence, les cristaux 10.1 à 10.n sont ordonnés selon l'ordre croissant ou décroissant de leur longueur. Cette disposition facilite le contrôle des moyens 20, en fonction de la translation recherchée. Elle n'est cependant pas indispensable, l'essentiel étant que l'ensemble comprenne n cristaux dont les longueurs respectives définissent la série $(2^{i-1})$ L1 avec i compris entre 1 et n.

En variante, on peut également utiliser des cristaux 10.1 à 10.n de natures différentes et présentant par conséquent des biréfringences $\Delta ni$ différentes. Dans ce cas, on choisit de préférence des longueurs Li des cristaux de sorte que ceux-ci définissent une série de translations $(2^{i-1})$ $(\Delta n1\ L1/n1^2)$ avec i variant de 1 à n et $(\Delta\ n1\ L1/n1^2)$ définissant la plus petite translation introduite par l'un des cristaux.

La gamme des cristaux (et cristaux liquides) utilisables est large.

Leur choix dépend de l'excursion et du discriminant $\Delta n1L1/n1^2$ souhaités.

Des cristaux à forte biréfringence ($\Delta n > 0,05$) permettent des excursions importantes. Par contre, des cristaux à faible biréfringence permettent des discriminants très faibles.

On notera que des cristaux (ou cristaux liquides) actifs optiquement et biaxiaux peuvent aussi être utilisés.

A titre d'exemple non limitatif, on peut utiliser pour les cristaux : du calcite, niobate de lithium, molibdate de plomb, $NaNo_3$,POM et cristaux moléculaires ou KDP et isomorphes, rutile, quartz et saphir, du dioxyde de tellure.

Le calcite présente une biréfringence $\Delta n = 0,17$ et un indice de réfraction ordinaire no = 1,4 à 632 nm. Il permet la réalisation de cristaux de l'ordre 30x30x30 mm. Pour obtenir une excursion $\Delta z$ de l'ordre de 5 mm, un cristal d'une longueur de l'ordre de 30 mm est requise.

Le niobate de lithium présente une biréfringence $\Delta n = 0,09$ et un indice de réfraction ordinaire no = 2,0 à 632 nm. Il permet la synthèse de cristaux de l'ordre de 100x100x100 mm. Pour obtenir une excursion $\Delta z$ de l'ordre de 5 mm, un cristal d'une longueur de l'ordre de 64 mm est requise.

A titre d'exemple non limitatif, on peut, dans un translateur à 5 étages, utiliser 5 cristaux de calcite 10.1 à 10.n présentant des longueurs de 1, 2, 4, 8 et 16 mm. Un tel étage présente une excursion de 3,81 mm et un discriminant de 120 µm. La résolution longitudinale est de 32 et la longueur totale du système : 50 mm.

Les moyens de polarisation 20 associés au cristal 10 placé le plus près de l'objet A, c'est-à-dire le plus éloigné de l'observateur 30, sont de préférence similaires à ceux précédemment décrits en regard de la figure 1, c'est-à-dire qu'ils comprennent avantageusement deux éléments séparés, à savoir : 1) un polariseur linéaire 21, et 2) un organe 22, dénommé valve ou rotateur, apte à tourner sélectivement la polarisation de 90°. Le polariseur 21 est tel que la polarisation qui en sort est, soit parallèle, soit perpendiculaire à l'axe B-B du cristal

10 le plus proche de l'objet. On notera que si la lumière est déjà polarisée, le premier polariseur n'est pas nécessaire.

Par contre, les moyens 20 associés aux autres cristaux 10 peuvent être formés seulement d'un rotateur ou valve 22 apte à tourner sélectivement la polarisation issue de l'étage immédiatement amont de 90°.

En fait, les moyens 20 associés auxdits cristaux 10 sont conçus pour, sélectivement, soit ne pas altérer l'orientation de la polarisation issue de l'étage amont, que celle-ci soit perpendiculaire ou parallèle à l'axe du cristal, soit tourner la polarisation de +90° ou -90° selon l'orientation de la polarisation issue de l'étage amont. On rappellera qu'un tel système ne voit pas de différence entre une polarisation tournée de +90° ou de -90°, ou entre une polarisation de 0, +180° ou -180°.

On va expliciter cette disposition à l'aide de l'exemple suivant.

Supposons un translateur à 5 étages référencés de 1 à 5 en rapprochement de l'objet A, des cristaux 10.1, 10.2, 10.3, 10.4 et 10.5 ayant tous leurs axes optiques B-B parallèles entre eux, un polariseur linéaire 21 définissant une polarisation linéaire perpendiculaire, à +90°, à l'axe optique B-B des différents cristaux 10.1 à 10.5, et des rotateurs 22.1, 22.2, 22.3, 22.4 et 22.5.

a) Pour visualiser le point A à la position A'o, les polarisations définies par les rotateurs 22.1 à 22.5 doivent être toutes perpendiculaires aux axes B-B des cristaux associés 10.1 à 10.5, Pour cela, les rotateurs 22.1 à 22.5 ne doivent pas altérer la polarisation qu'ils reçoivent du polariseur 21 ou de l'étage amont, qui est toujours perpendiculaire aux axes B-B.

b) Pour visualiser le point A à la position A'e, les polarisations définies par les rotateurs 22.1 à 22.5 doivent être parallèles aux axes B-B des cristaux associés 10.1 à 10.5. Pour cela, le premier rotateur 22.5 doit tourner de -90° la polarisation issue du polariseur 21, tandis que les autres polariseurs 22.1 à 22.4 ne doivent pas tourner la polarisation qu'ils reçoivent, afin de maintenir celle-ci parallèle aux axes B-B.

c) Pour translater le point A entre A'o et A'e à une distance $\Delta$ n3L3/n3$^2$ de A'o où $\Delta$n3 représente la biréfringence du cristal 10.3 et L3 la longueur selon l'axe O-O de ce cristal 10.3, la polarisation linéaire doit être perpendiculaire aux axes B-B dans les cristaux 10.5, 10.4, parallèle à l'axe B-B dans le cristal 10.3 et perpendiculaire aux axes B-B dans les cristaux 10.2 et 10.1. Pour cela, les rotateurs 22.1 à 22.5 procèdent comme suit : les rotateurs 22.5 et 22.4 n'altèrent pas la polarisation qu'ils reçoivent du polariseur 21 et du cristal 10.5, le rotateur 22.3 tourne de -90° la polarisation qu'il reçoit du cristal 10.4, le rotateur 22.2 tourne de +90° la polarisation qu'il reçoit du cristal 10.3 et le rotateur 22.1 ne tourne pas la polarisation qu'il reçoit du cristal 10.2.

Les valves ou rotateurs 22 destinés à faire tourner la polarisation de 90° peuvent faire l'objet de nombreux modes de réalisation. Ces valves ou rotateurs 22 peuvent être formés par exemple, 1) de valves PLZT basées sur l'effet électrooptique dans les céramiques, telles que les valves de ce type commercialisées par Motorola, ou 2) de valves MOD magnétooptiques basées sur l'effet Faraday dans des composants YIG, tel que le modèle SEMETEX SCO1, ou 3) de valves à cristaux liquides ferroélectriques basées sur les cristaux liquides "Smectic C" ferroeidelectriques, nématiques ou électrocliniques, tel que le modèle Displaytech LCO75-OEM.

En l'état actuel, les valves à cristaux liquides et les PLZT semblent préférées par les inventeurs car elles requièrent des tensions de commande de l'ordre de 15 volts plus faibles que les valves PLZT (de l'ordre de 350 V) et présentent une absorption plus faible que les valves MOD magnétooptiques.

On va maintenant décrire l'écran tri-dimensionnel représenté schématiquement sur la figure 3 annexée.

Pour l'essentiel, cet écran comprend un translateur optique biréfringent T, du type précédemment décrit en regard des figures 1 et 2, et un système à balayage B placé en amont du translateur T et conçu pour déplacer un point, de façon contrôlée, dans un plan P perpendiculaire à l'axe optique O-O du translateur (matérialisé par exemple par un diffuseur). En d'autres termes, le système à balayage B permet le déplacement d'un point dans un plan P défini par des axes x, y orthogonaux, tandis que le translateur T permet de déplacer l'image du point selon un troisième axe z, orthogonal aux axes x, y et confondu avec l'axe O-O.

Sur la figure 3 annexée, on a matérialisé en b1, b2, b3, b4, b5, 5 entrées de commande respectives des valves 22, permettant de sélectionner l'orientation de polarisation imposée par ces valves (on suppose donc que le translateur T comprend 5 étages).

Si nécessaire, un système optique auxiliaire 40 peut être placé en aval du translateur T.

L'écran précité peut fonctionner, soit en mode synchrone, soit en mode asynchrone.

En mode synchrone, un premier point de coordonnées x1, y1 est affiché sur le diffuseur P par le système à balayage B et au même instant le translateur T est actionné par contrôle des commandes b1 à b5 pour définir la translation longitudinale z1 requise correspondant à ce premier point. Puis au bout d'un temps z, un second point de coordonnées x2, y2 est affiché par le système B et la translation longitudinale z2 requise est définie par le translateur T.

En d'autres termes, en mode synchrone, les différents points latéraux sont définis successivement : à chaque mouvement latéral en x, y est associée une translation longitudinale en z. Le temps de réponse du système

à balayage B doit donc être égal à celui du translateur T.

En mode asynchrone en revanche, le translateur définit une translation longitudinale z et les différents points correspondants à ce même plan sont affichés simultanément ou l'un après l'autre, puis le translateur définit une seconde translation longitudinale z et les points correspondants à ce second plan sont affichés et ainsi de suite. Dans le cadre du mode asynchrone, le translateur longitudinal T peut présenter un temps de réponse beaucoup plus lent.

Un solution simple est le mode asynchrone parallèle. Par exemple, le système à balayage B peut comprendre un émetteur formé d'une ligne d'éléments émetteurs discrets - par exemple des diodes électroluminescentes - positionnés dans la direction x et de moyens de balayage en y.

A titre d'exemple, pour un écran 128x128x128, le temps de réponse d'un système synchrone serait de l'ordre de 2,5 $\mu$ avec une fréquence de rafraîchissement de 25 Hz et un mode de champs intercalés pour éviter le scintillement (présentation à l'observateur de deux "champs" l'un correspondant aux lignes paires, l'autre aux lignes impaires).

Pour le système asynchrone, le temps de réponse du translateur longitudinale T serait par exemple de l'ordre de 300 $\mu$s et le système de balayage B aurait un temps d'accès par point de 2,5 $\mu$s, cet accès se faisant de façon aléatoire.

Pour le mode asynchrone parallèle, l'émetteur pourrait être formé d'une ligne de 128 diodes, le temps d'accès par point en y serait de 2,5 $\mu$s avec une fréquence de rafraîchissement de 25 Hz et un mode de champs intercalés pour éviter le scintillement : le temps de réponse du translateur longitudinal T pourrait être de l'ordre de 300 $\mu$s.

Bien entendu, la présente invention n'est pas limitée aux modes de réalisation particuliers qui viennent d'être décrits mais s'étend à toutes variantes conformes à la portée des revendications.

Dans la description qui précède, on a indiqué que l'axe optique du cristal biréfringent est au moins sensiblement perpendiculaire à l'axe optique du système.

L'axe optique du cristal peut ne pas être parfaitement perpendiculaire à l'axe du système. De cette façon, on peut faire varier les translations ($\Delta$ne Le/ne$^2$) en modifiant l'angle entre l'axe optique du cristal et celui du système.

A titre d'exemples non limitatifs, le translateur peut être utilisé dans les applications suivantes :

- pour focaliser un laser sans moyen mécanique ; le translateur permet par exemple de régler avec précision la position longitudinale du point de focalisation du laser, par exemple sur une fibre ou sur un trou de filtrage.
- pour focaliser une image, tant dans le domaine macroscopique que microscopique.
- dans le cas d'une image ou d'un observateur mobile, focalisation dynamique de l'image, pour des applications liées à la stabilisation.
- focalisation dynamique d'une image par juxtaposition de translateurs (équivalent aux systèmes à miroirs déformables pour grands télescopes).
- utilisation pour l'holographie conoscopique pour déplacer le plan d'analyse de façon à mesurer des hologrammes dans des plans différents.

## Revendications

1. Translateur optique biréfringent définissant un axe optique (O-O) et apte à déplacer l'image d'un point le long de cet axe comprenant au moins un cristal biréfringent (10), et des moyens de polarisation (20, 21, 22) placés en amont du cristal biréfringent (10), entre celui-ci et un objet (A) et adaptés pour définir de façon contrôlée alternativement, soit une polarisation linéaire perpendiculaire à l'axe optique (B-B) du cristal (10), soit une polarisation linéaire parallèle à l'axe optique (B-B) de celui-ci, caractérisé par le fait que l'axe optique (B-B) du cristal biréfringent est sensiblement perpendiculaire à l'axe optique du translateur.

2. Translateur optique biréfringent selon la revendication 1, caractérisé par le fait que les moyens de polarisation (20) comprennent un polariseur linéaire (21) et un organe (22) adapté pour assurer sélectivement une rotation de 90° de la direction de polarisation.

3. Translateur optique biréfringent selon la revendication 1 ou 2, caractérisé par le fait qu'il comprend une pluralité d'étages (n) justaposés selon l'axe optique (O-O) du translateur et comportant chacun :
   - un cristal biréfringent (10.1, 10.n) dont l'axe optique (B-B) est sensiblement perpendiculaire à l'axe optique (O-O) du translateur, et
   - des moyens de polarisation (20, 21, 22) placés en amont de chaque cristal biréfringent respectivement associé et adaptés pour définir de façon contrôlée, alternativement, soit une polarisation linéaire perpendiculaire à l'axe optique (B-B) du cristal (10) associé, soit une polarisation linéaire parallèle à l'axe optique (B-B) de ce cristal associé (10).

4. Translateur optique biréfringent selon la revendication 3, caractérisé par le fait que les moyens de polarisation (20) de l'étage le plus proche de l'objet à observer comprennent un polariseur linéaire (21) et un organe (22) adapté pour assurer sélectivement une rotation de 90° de la direction de polarisation, tandis que les moyens de polarisation des autres étages comprennent un organe (22.1, 22.2...) adapté pour sélectivement, soit ne pas altérer la direction de polarisation, soit assurer une rotation de +90° de la direction de polarisation, soit assurer une rotation de -90° de la direction de polarisation.

5. Translateur optique biréfringent selon la revendication 3 ou 4, caractérisé par le fait que les axes optiques (B-B) de tous les cristaux biréfringents (10.1...10.n) sont parallèles entre eux.

6. Translateur optique biréfringent selon les revendications 4 et 5 prises en combinaison, caractérisé par le fait que les axes optiques (B-B) des cristaux biréfringents (10.1... 10.n) sont parallèles ou orthogonaux à l'axe de la polarisation issue du polariseur linéaire (21).

7. Translateur optique biréfringent selon l'une des revendications 1 à 5, caractérisé par le fait que chaque cristal biréfringent (10) est choisi dans le groupe comprenant : la calcite, le niobate de lithium, le molibdate de plomb, Na $No_3$, POM et les cristaux moléculaires, KDP et isomorphes, le rutile, le quartz et le saphir, le dioxyde de tellure.

8. Translateur optique biréfringent selon la revendication 4, caractérisé par le fait que les organes (22) conçus pour assurer sélectivement une rotation de la direction de polarisation sont choisis dans le groupe comprenant : les valve PLZT, basées sur un effet électrooptique dans les céramiques, les valves MOD magnétooptiques basées sur l'effet Faraday dans des composants de type YIG, les valves à cristaux liquides ferroélectriques basées sur les cristaux liquides Smectic C, ferroeidelectriques, nématiques ou électrocliniques.

9. Translateur optique biréfringent selon l'une des revendications 3 à 8, caractérisé par le fait que les différents étages sont conçus pour opérer n translations respectives $\Delta ni\ Li/ni^2$ évoluant selon la progression géométrique de 2 définie par $(2^{i-1})\ \Delta\ n1\ L1/n1^2$ où $\Delta ni$ représente la biréfringence du cristal i, Li représente la longueur, selon l'axe optique (O-O) du translateur, du cristal i, ni est l'indice de réfraction du cristal, et $\Delta n1L1/n1^2$ représente la plus petite translation opérée par l'un des cristaux.

10. Translateur optique biréfringent selon l'une des revendications 3 à 9, caractérisé par le fait que les cristaux biréfringents (10.1, 10.n) placés dans les différents étages sont tous réalisés dans le même matériau.

11. Translateur optique biréfringent selon la revendication 10, caractérisé par le fait que les longueurs Li des cristaux (10.1, 10.n), considérées selon l'axe optique (O-O) du translateur, évoluent selon une progression géométrique de 2 : $(2^{i-1})$L1, où L1 représente la longueur du plus petit cristal.

12. Translateur optique biréfringent selon la revendication 11, caractérisé par le fait que les cristaux (10.1, 10.n) sont ordonnés dans l'ordre de variation de longueur, selon l'axe optique (O-O) du translateur.

13. Translateur optique biréfringent selon l'une des revendications 3 à 11, caractérisé par le fait que le nombre d'étages (n) est de l'ordre de 5 à 9.

14. Ecran tri-dimensionnel, caractérisé par le fait qu'il comprend :
   - un translateur optique biréfringent (10, 20) conforme à l'une des revendications 1 à 13, et
   - un système à balayage (B) placé en amont du translateur et conçu pour déplacer un point, de façon contrôlée, dans un plan (P) perpendiculaire à l'axe optique (O-O) du translateur.

15. Ecran tri-dimensionnel selon la revendication 14, caractérisé par le fait que le système à balayage (B) est choisi dans le groupe comprenant un écran plat à plasma, électroluminescent ou à cristal liquide, un tube cathodique, une source lumineuse associée à un miroir mobile et un système acoustooptique.

16. Ecran tri-dimensionnel selon la revendication 14 ou 15, caractérisé par le fait qu'il est commandé en mode synchrone : à chaque mouvement latéral en x, y défini par le système à balayage (B) est associée une

translation longitudinale en z définie par le translateur (T).

17. Ecran tri-dimensionnel selon la revendication 14 ou 15, caractérisé par le fait qu'il est commandé en mode asynchrone.

18. Utilisation d'un translateur optique biréfringent selon l'une des revendications 1 à 13, pour focaliser un laser, focaliser une image, opérer une focalisation dynamique d'une image pour des applications liées à la stabilisation, opérer une focalisation dynamique d'une image par juxtaposition de translateurs ou déplacer le plan d'analyse de façon à mesurer des hologrammes de plans différents dans le cadre de l'holographie conoscopique.

## Patentansprüche

1. Optischer doppelbrechender Translator, der eine optische Achse (0-0) bestimmt und zum Verschieben der Abbildung eines Punktes längs dieser Achse dient, umfassend mindestens einen doppelbrechenden Kristall (10) und Polarisationsmittel (20, 21, 22), die vor dem doppelbrechenden Kristall (10) zwischen diesem und einem Objekt (A) angeordnet sind und dazu dienen, wahlweise kontrolliert entweder zu der optischen Achse (B-B) des Kristalls (10) eine lineare, senkrechte Polarisation oder eine zur optischen Achse (B-B) desselben lineare, parallele Polarisation zu bestimmen, dadurch gekennzeichnet, daß die optische Achse (B-B) des doppelbrechenden Kristalls im wesentlichen senkrecht zur optischen Achse des Translators verläuft.

2. Optischer, doppelbrechender Translator nach Anspruch 1, dadurch gekennzeichnet, daß die Polarisationsmittel (20) einen linearen Polarisator (21) und ein Element (22) umfassen, das geeignet ist, wahlweise eine Drehung der Polarisationsrichtung um 90° durchzuführen.

3. Optischer, doppelbrechender Translator nach Anspruch 1 oder 2, dadurch gekennzeichnet, daß er eine Mehrzahl von Stufen (n) umfaßt, die längs der optischen Achse 0-0 des Translators ausgerichtet sind und jeweils umfassen:
   - einen doppelbrechenden Kristall (10.1, 10.n) dessen optische Achse (B-B) im wesentlichen senkrecht zur optischen Achse (0-0) des Translators verläuft, und
   - Polarisationsmitteln (20, 21, 22), die vor dem jeweils zugeordneten, doppelbrechenden Kristall angeordnet und geeignet sind, wahlweise gesteuert eine lineare, senkrechte Polarisation zur optischen Achse (B-B) des zugehörigen Kristalls (10) oder eine lineare, parallele Polarisation zur optischen Achse (B-B) des zugehörigen Kristalls (10) zu erzeugen.

4. Optischer, doppelbrechender Translator nach Anspruch 3, dadurch gekennzeichnet, daß die Polarisationsmittel (20) der dem zu beobachtenden Objekt nächstliegenden Stufe einen linearen Polarisator (21) und ein Element (22) umfassen, das geeignet ist, wahlweise eine Drehung der Polarisationsrichtung um 90° durchzuführen, während die Polarisationsmittel der anderen Stufen ein Element (22.1, 22.2...) umfassen, das geeignet ist, um wahlweise die Polarisationsrichtung nicht zu ändern oder eine Drehung von der Polarisationsrichtung um +90° sicherzustellen, oder eine Drehung der Polarisationsrichtung um -90° auszuführen.

5. Optischer, doppelbrechender Translator nach Anspruch 3 oder 4, dadurch gekennzeichnet, daß die optischen Achsen (B-B) aller doppelbrechender Kristalle (10.1...10.n) zueinander parallel sind.

6. Optischer, doppelbrechender Translator nach den Ansprüchen 4 und 5, in Kombination, dadurch gekennzeichnet, daß die optischen Achsen (B-B) der doppelbrechenden Kristalle (10.1...10.n) parallel oder orthogonal zur Achse der von dem linearen Polarisator (21) abgegebenen Polarisation sind.

7. Optischer, doppelbrechender Translator nach einem der Ansprüche 1 bis 5, dadurch gekennzeichnet, daß jeder doppelbrechende Kristall (10) ausgewählt ist aus der Gruppe bestehend aus: dem Calcit, dem Lithiumniobat, dem Bleimolibdat, $Na\ No_3$, POM und den molekularen Kristallen, KDP und isomorphen Kristallen, dem Rutil, dem Quarz und dem Saphir, dem Tellurdioxid.

8. Optischer, doppelbrechender Translator nach Anspruch 4, dadurch gekennzeichnet, daß die Elemente (22) zum wahlweisen Ausführen einer Drehung der Polarisationsrichtung aus der Gruppe ausgewählt

sind, welche umfaßt: die Ventile PLZT, die auf dem elektrooptischen Effekt in Keramiken basieren, den magnetooptischen Ventilen MOD, die auf dem Faraday-Effekt in Bestandteilen des Typs YIG basieren, den ferroelektrischen, Flüssigkristallventilen, die auf den flüssigen, ferroidelektrischen, nematischen oder elektroklinischen Flüssigkristallen Smectic C basieren.

**9.** Optischer, doppelbrechender Translator nach einem der Ansprüche 3 bis 8, dadurch gekennzeichnet, daß die verschiedenen Stufen vorhanden sind, um n entsprechende Translationen $\Delta ni\ Li/ni^2$ vorzunehmen, hervorgerufen gemäß der geometrischen Progression von 2, definiert durch $(2^{i-1})\ \Delta n1\ L1/n1^2$, wobei $\Delta ni$ die Doppelbrechung des Kristalls i darstellt, Li die Länge des Kristalls i längs der optischen Achse (0-0) des Translators ist, ni der Brechungsindex des Kristalls ist und $\Delta n1L1/n1^2$ die kleinste Verschiebung darstellt, die durch einen der Kristalle bewirkt wird.

**10.** Optischer, doppelbrechender Translator nach einem der Ansprüche 3 bis 9, dadurch gekennzeichnet, daß die doppelbrechenden Kristalle (10.1, 10.n), die in den verschiedenen Stufen angeordnet sind, sämtlich aus demselben Werkstoff hergestellt sind.

**11.** Optischer, doppelbrechender Translator nach Anspruch 10, dadurch gekennzeichnet, daß die Längen Li der Kristalle (10.1, 10.n), betrachtet längs der optischen Achse (0-0) des Translators, gemäß einer geometrischen Progression von 2 : $(2^{i-1})L1$ gewählt werden, wobei L1 die Länge des kleinsten Kristalls darstellt.

**12.** Optischer, doppelbrechender Translator nach Anspruch 11, dadurch gekennzeichnet, daß die Kristalle (10.1, 10.n) in der Reihenfolge veränderter Länge längs der optischen Achse (0-0) des Translators angeordnet sind.

**13.** Optischer, doppelbrechender Translator nach einem der Ansprüche 3 bis 11, dadurch gekennzeichnet, daß die Zahl der Stufen (n) 5 bis 9 beträgt.

**14.** Dreidimensionaler Schirm, dadurch gekennzeichnet, daß er umfaßt:
- einen optischen, doppelbrechenden Translator (10, 20) entsprechend einem der Ansprüche 1 bis 13, und
- ein Abtastsystem (B), das vor dem Translator angeordnet ist und zum gesteuerten Verschieben eines Punktes in einer zur optischen Achse (0-0) des Translators senkrechten Ebene (P) dient.

**15.** Dreidimensionaler Schirm nach Anspruch 14, dadurch gekennzeichnet, daß das Abtastsystem (B) ausgewählt ist aus der Gruppe umfassend einen ebenen Plasmaschirm, einen Elektrolumineszenzschirm oder einen Flüssigkristallschirm, eine Kathodenstrahlröhre, eine Lichtquelle, die einem beweglichen Spiegel zugeordnet ist, und ein akustooptisches System.

**16.** Dreidimensionaler Schirm nach Anspruch 14 oder 15, dadurch gekennzeichnet, daß er synchron gesteuert wird: wobei jeder seitlichen Bewegung nach x, y, die durch das Abtastsystem (B) bestimmt wird eine longitudinale Verschiebung längs z zugeordnet ist, die durch den Translator (T) bestimmt wird.

**17.** Dreidimensionaler Schirm nach Anspruch 14 oder 15, dadurch gekennzeichnet, daß er asynchron gesteuert wird.

**18.** Verwendung eines optischen, doppelbrechenden Translators nach einem der Ansprüche 1 bis 13 zum Fokussieren eines Lasers, zum Fokussieren eines Bildes, zum Betreiben einer dynamischen Fokussierung eines Bildes für mit der Stabilisierung verbundene Anwendungsformen, zum Betreiben einer dynamischen Fokussierung eines Bildes durch Ausrichten der Translatoren oder durch Verschieben der Analyseebene zum Messen von verschiedenen Hologrammebenen im Rahmen der konoskopischen Holographie.

## Claims

**1.** A birefringent optical translator defining an optical axis (0-0) capable of displacing the image of a point along said axis comprising at least one birefringent crystal (10) and polarization means (20, 21, 22) placed upstream from the birefringent crystal (10) between the birefringent crystal and an object (A), and adapted

to define in controlled, alternating manner, either linear polarization perpendicular to the optical axis (B-B) of the crystal (10), or else linear polarization parallel to the optical axis (B-B) of the crystal, characterized by the fact that the optical axis (B-B) of the birefringent crystal is substantially perpendicular to the optical axis of the translator.

2. A birefringent optical translator according to claim 1, characterized by the fact that the polarization means (20) comprise a linear polarizer (21) and a member (22) adapted to selectively rotate the polarization direction through 90°.

3. A birefringent optical translator according to claim 1 or 2, characterized by the fact that it comprises a plurality of stages (n) juxtaposed along the optical axis (O-O) of the translator and each comprising:
a birefringent crystal (10.1, 10.n) whose optical axis (B-B) is substantially perpendicular to the optical axis (O-O) of the translator; and
polarization means (20, 21, 22) placed upstream from each birefringent crystal respectively associated therewith and adapted to define in controlled, alternating manner, either linear polarization perpendicular to the optical axis (B-B) of the associated crystal (10), or else linear polarization parallel to the optical axis (B-B) of said associated crystal (10).

4. A birefringent optical translator according to claim 3, characterized by the fact that the polarization means (20) of the stage closest to the object to be observed comprise a linear polarizer (21) and a member (22) for selectively rotating the polarization direction through 90°, whereas the polarization means of the other stages comprise a member (22.1, 22.2, ...) adapted selectively either to leave the direction of polarization unchanged, or to rotate the direction of polarization through +90°, or else to rotate the direction of polarization through -90°.

5. A birefringent optical translator according to claim 3 or 4, characterized by the fact that the optical axes (B-B) of all the birefringent crystals (10.1, ..., 10.n) are parallel to one another.

6. A birefringent optical translator according to claims 4 and 5 taken in combination, characterized by the fact that the optical axes (B-B) of the birefringent crystals (10.1, ..., 10.n) are parallel or orthogonal to the axis of polarization coming from the linear polarizer (2).

7. A birefringent optical translator according to any one of claims 1 to 5, characterized by the fact that each birefringent crystal (10) is selected from the group comprising: calcite; lithium niobate; lead molybdate; $NaNo_3$; POM and molecular crystals; KDP and isomorphs; rutile; quartz and sapphire; and tellurium dioxide.

8. A birefringent optical translator according to claim 4, characterized by the tact that the members (22) designed to selectively rotate the polarization direction are selected from the group comprising: PLZT valves based on an electro-optical effect in ceramics; magneto-optical MOD valves based on the Faraday effect in YIG type components; and ferroelectric crystal valves based on Smectic C, ferrodielectric, nematic, or electroclinic liquid crystals.

9. A birefringent optical translator according to any one of claims 3 to 8, characterized by the fact that the various stages are designed to operate n respective translations $\delta ni\ Li/Ni^2$ constituting a geometrical progression of ratio 2 defined by $(2^{i-1})\ \delta n1\ L1/n1^2$ where δni represent the birefringence of crystal i, where Li represents the length of crystal i in the direction of the optical axis (O-O) of the translator, where ni is the refractive index of the crystal, and where $\delta n1L1/n1^2$ represents the smallest translation provided by any of the crystals.

10. A birefringent optical translator according to claims 3 to 9, characterized by the fact that the birefringent crystals (10.1, 10.n) placed in the various stages are all made of the same material.

11. A birefringent optical translator according to claim 10, characterized by the fact that the lengths Li of the crystals (10.1, 10.n) along the optical axis (O-O) of the translator constitute a geometrical progression of ratio 2: $(2^{i-1})L1$ where L1 represents the length of the smallest crystal.

12. A birefringent optical translator according to claim 11, characterized by the fact that the crystals (10.1, 10.n) are ordered in length-varying order along the optical axis (O-O) of the translator.

13. A birefringent optical translator according to any one of claims 3 to 11, characterized by the fact that the number of stages (n) is about 5 to 9.

14. A three-dimensional screen, characterized by the fact that it comprises:

    a birefringent optical translator (10, 20) according to any one of claims 1 to 13; and

    a scanning system (B) placed upstream from the translator and designed to displace a point in controlled manner over a plane (P) perpendicular to the optical axis (O-O) of the translator.

15. A three-dimensional screen according to claim 14, characterized by the fact that the scanning system (B) is selected from the group comprising: a plasma, electroluminescent, or liquid crystal flat screen; a cathode ray tube; a light source associated with a moving mirror; and an acousto-optical system.

16. A three-dimensional screen according to claim 14 or 15, characterized by the fact that it is controlled in synchronous mode: each lateral motion in the (x, y) plane defined by the scanning system (B) is associated with a longitudinal translation in the z direction defined by the translator (T).

17. A three-dimensional screen according to claim 14 or 15, characterized by the fact that it is controlled in asynchronous mode.

18. The use of a birefringent optical translator according to any one of claims 1 to 13 for: focusing a laser, focusing an image; performing dynamic focusing of an image for applications related to stabilization; performing dynamic focusing of an image by juxtaposition of translators; or displacing the analysis plane so as to measure holograms in different plans in the context of conoscopic holography.

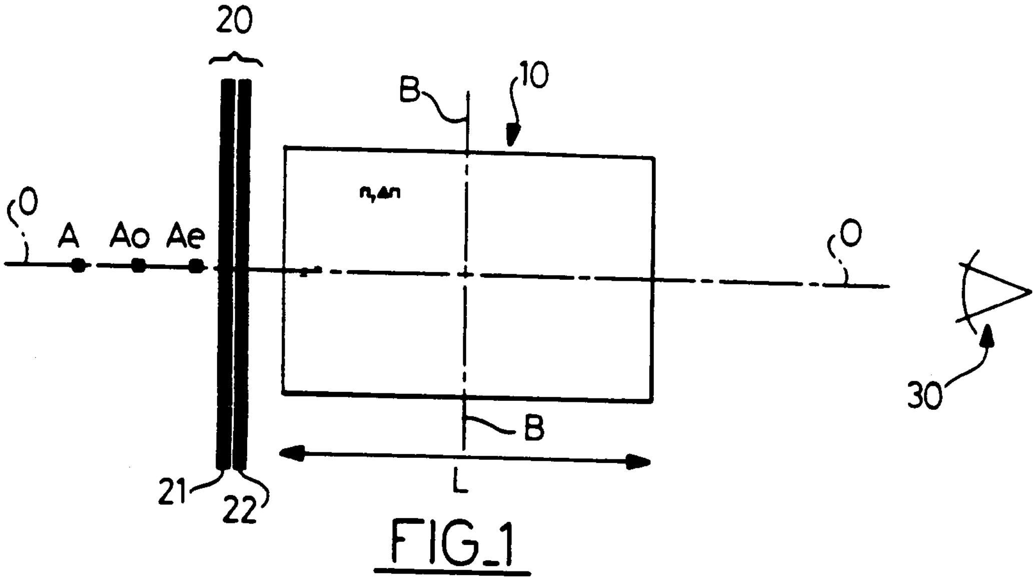


FIG_1

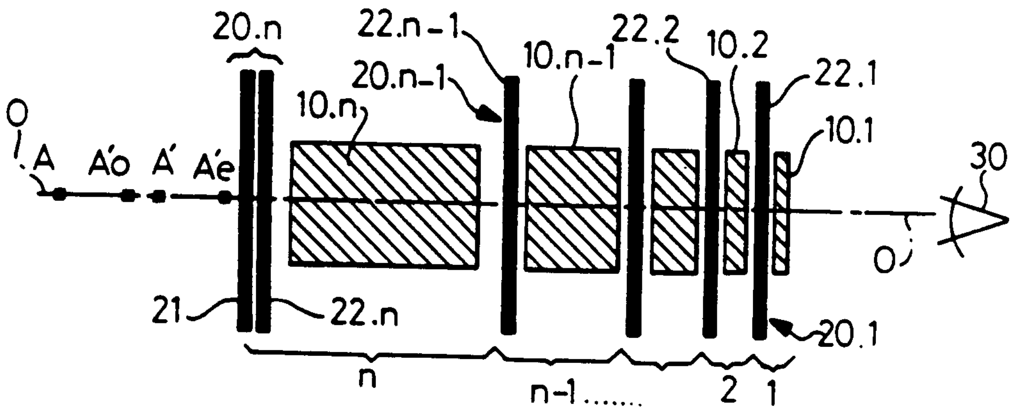


FIG_2

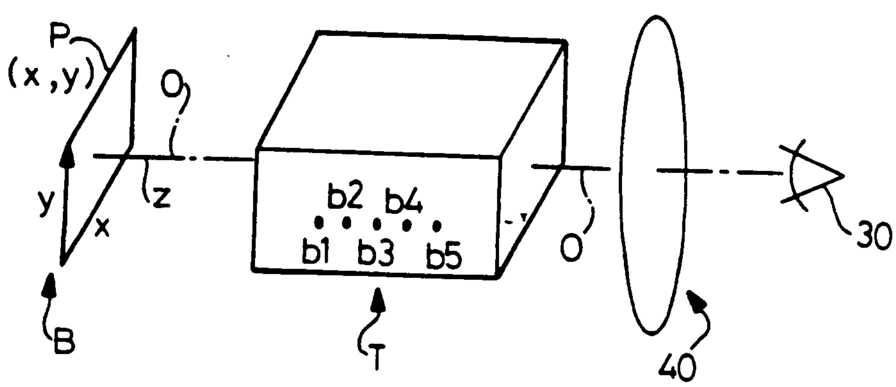


FIG_3